# EUROPEAN PATENT SPECIFICATION

(11) **EP 2 645 883 B1**
(45) Date of publication and mention of the grant of the patent: **18.05.2016**
(21) Application number: 11794595.6
(22) Date of filing: 22.11.2011
(51) Int. Cl.: A23L 33/155, A23L 33/19

(54) **STAGED INFANT FEEDING REGIMEN TO PROMOTE HEALTHY DEVELOPMENT AND GROWTH**
STUFENWEISER DOSIERUNGSPLAN FÜR SÄUGLINGSERNÄHRUNG ZUR FÖRDERUNG VON GESUNDER ENTWICKLUNG UND WACHSTUM
RÉGIME ALIMENTAIRE MULTIPHASES DESTINÉ AUX NOURRISSONS ET VISANT À LES GARDER EN BONNE SANTÉ ET À FAVORISER LEUR CROISSANCE

(30) Priority: 30.11.2010 US 956639
(43) Date of publication of application: 09.10.2013
(73) Proprietor: MJN U.S. Holdings LLC, Glenview, IL 60026 (US)
(72) Inventor: WALSH, Kelly R.,, Newburgh, Indiana 47630 (US); SIMS, Kevin A.,, Evansville, Indiana 47725 (US); SCHADE, Deborah,, Evansville, Indiana 47712 (US); WALKER, Donald Carey, Westerville, OH 43082 (US)
(74) Representative: V.O.
(86) International application number: PCT/US2011/061880
(87) International publication number: WO 2012/074844

(56) References cited:
- WO-A1-2009/068549
- US-A1- 2010 104 545
- KUNZ C., LÖNNERDAL B.: "Re-evaluation of the whey protein/casein ratio of human milk", ACTA PAEDIATRICA, [Online] vol. 81, no. 2, February 1992 (1992-02), pages 1-1, XP002667073, Acta Paediatrica
- KATOKU Y ET AL: "EFFECT OF THE CHOLESTEROL CONTENT OF A FORMULA ON THE LIPID COMPOSITIONS OF PLASMA LIPOPROTEINS AND RED BLOOD CELL MEMBRANES IN EARLY INFANCY", THE AMERICAN JOURNAL OF CLINICAL NUTRITION, AMERICAN SOCIETY FOR NUTRITION, US, vol. 64, no. 6, 1 January 1996 (1996-01-01), pages 871-877, XP008038785, ISSN: 0002-9165
- C. L. WAGNER ET AL: "Prevention of Rickets and Vitamin D Deficiency in Infants, Children, and Adolescents", PEDIATRICS, vol. 122, no. 5, 31 October 2008 (2008-10-31), pages 1142-1152, XP55016493, ISSN: 0031-4005, DOI: 10.1542/peds.2008-1862
- Boosba Vivatvakin ET AL: "Effect of a whey-predominant starter formula containing LCPUFAs and oligosaccharides (FOS/GOS) on gastrointestinal comfort in infants", Asia Pac J Clin Nutr, 1 January 2010 (2010-01-01), pages 473-480, XP55016496, Retrieved from the Internet: URL:http://apjcn.nhri.org.tw/server/APJCN/ Volume19/vol19.4/Finished/4_1742_473-480.p df [retrieved on 2012-01-13]

## Description

### TECHNICAL FIELD

This disclosure relates generally to the field of nutritional feeding regimen for infants. More particularly, the disclosure relates to a staged nutritional feeding regimen for infants, which provides improved nutritional functionality, more closely aligned with an infant's needs as he or she develops. More specifically, it is widely believed that an infant's nutritional needs differ during early development; indeed, it is logical that the nutritional needs of a newborn (i.e., a human infant from birth through 4 months of age) differ from the nutritional needs of a later stage infant (i.e., from 4 months of age through 1 year).

### BACKGROUND ART

Certain factors present in human breast milk are believed to be beneficial to the infant developing body. For instance, a developing infant has certain requirements relating to fats and proteins, as well as other nutrients. In addition, the gut microflora of a human is a complex collection of interrelated microbes which act together to facilitate the digestive process. In the case of infants, the gut microflora is rapidly established in the first few weeks following birth, through the first year of development. Moreover, functional proteins such as transforming growth factor-beta (TGF-β) play a significant role in many processes necessary for health and development in infants. However, the needs of an infant for the foregoing changes during development.

In the breast-fed infant, for example, *Bifidobacterium* spp. dominate among intestinal bacteria, with *Streptococcus* spp. and *Lactobacillus* spp. as less common contributors. In contrast, the microflora of formula-fed infants is more diverse, containing *Bifidobacterium* spp. and *Bacteroides* spp. as well as the more pathogenic species, *Staphylococcus*, *Escherichia coli* and *Clostridia.* The varied species of *Bifidobacterium* in the stools of breast-fed and formula-fed infants differ as well.

*Bifidobacteria* are generally considered "beneficial" bacteria and are known to protect against colonization by pathogenic bacteria. This likely occurs through competition for cell surface receptors, competition for essential nutrients, production of anti-microbial agents, and production of inhibitory compounds such as short chain fatty acids (SCFA) which may decrease fecal pH and inhibit potentially pathogenic bacteria.

*Bifidobacteria* are also associated with resistance to gastrointestinal (GI) tract and respiratory infection as well as an enhanced immune function, especially in children and infants. Therefore, the promotion of an intestinal environment in which *Bifidobacteria* dominate has become a goal in the development of nutritional compositions, including nutritional formulations for adults and children and compositions for formula-fed infants.

Human milk (HM) contains a number of factors that may contribute to the growth and population of *Bifidobacteria* in the gut microflora of infants. Among these factors is a complex mixture of more than 130 different oligosaccharides that reach levels as high as 8-12 g/L in transitional and mature milk. Kunz, et al., Oligosaccharides in Human Milk: Structure, Functional, and Metabolic Aspects, Ann. Rev. Nutr. 20: 699-722 (2000). These oligosaccharides are resistant to enzymatic digestion in the upper gastrointestinal tract and reach the colon intact, where they serve as substrates for colonic fermentation.

HM oligosaccharides are believed to elicit an increase in the number of *Bifidobacteria* in the colonic flora, along with a reduction in the number of potentially pathogenic bacteria. Kunz, et al., Oligosaccharides in Human Milk: Structure, Functional, and Metabolic Aspects, Ann. Rev. Nutr. 20: 699-722 (2000); Newburg, Do the Binding Properties of Oligosaccharides in Milk Protect Human Infants from Gastrointestinal Bacteria?, J. Nutr. 217:8980-8984 (1997). One way that HM oligosaccharides may increase the number of *Bifidobacteria* and reduce the number of potentially pathogenic bacteria is by acting as competitive receptors and inhibiting the binding of pathogens to the cell surface. Rivero-Urgell, et al., Oligosaccharides: Application in Infant Food, Early Hum. Dev. 65(S):43-52 (2001).

In addition to reducing the number of pathogenic bacteria and promoting the population of *Bifidobacteria,* when HM oligosaccharides are fermented, they produce SCFAs such as acetic, propionic and butyric acids. These SCFAs are believed to contribute to caloric content, serve as a major energy source for the intestinal epithelium, stimulate sodium and water absorption in the colon, and enhance small bowel digestion and absorption. In addition, SCFA are believed to contribute to overall gastrointestinal health by modulating gastrointestinal development and immune function.

The fermentation of HM oligosaccharides also reduces fecal ammonia, amine, and phenol concentrations, which have been implicated as the major odorous components of feces. Cummings & Macfarlane, The Control and Consequences of Bacterial Fermentation in the Human Colon, J. Appl. Bacteriol. 70:443-459 (1991); Miner & Hazen, Ammonia and Amines: Components of Swine-Building Odor ASAE 12:772-774 (1969); Spoelstra, Origin of Objectionable Components in Piggery Wastes and the Possibility of Applying Indicator Components for Studying Odour Development, Agric. Environ. 5:241-260 (1980); O'Neill & Phillips, A Review of the Control of Odor Nuisance from Livestock Buildings: Part 3. Properties of the Odorous Substances which have been Identified in Livestock Wastes or in the Air Around them J. Agric. Eng. Res. 53:23-50 (1992).

As a result of the oligosaccharides present in HM, the SCFA profile of a breast-fed infant is very different from that of a formula-fed infant. For example, breast-fed infants produce virtually no butyrate, with acetate comprising approximately 96% of the total SCFA production. Lifschitz, et al., Characterization of Carbohydrate Fermentation in Feces of Formula-Fed and Breast-Fed Infants, Pediatr. Res. 27:165-169 (1990); Siigur, et al., Faecal Short-Chain Fatty Acids in Breast-Fed and Bottle-Fed Infants. Acta. Paediatr. 82:536-538 (1993); Edwards, et al., Faecal Short-Chain Fatty Acids in Breast-Fed and Formula-Fed Babies, Acta. Paediatr. 72:459-462 (1994); Parrett & Edwards, In Vitro Fermentation of Carbohydrates by Breast Fed and Formula Fed Infants, Arch. Dis. Child 76:249-253 (1997). In contrast, while formula-fed infants also have acetate (74%) as the major SCFA in feces, they have considerable amounts of propionate (23%) and small amounts of butyrate (3%) present as well. These differences between the SCFA profiles of breast-fed infants and formula-fed infants could affect the energy, digestion, and overall health of the formula-fed infant.

Because cow's milk and commercially available infant formulas that are based on cow's milk provide only trace amounts of oligosaccharides, prebiotics are often used to supplement the diet of formula-fed infants. Prebiotics have been defined as "non-digestible food ingredients that beneficially affect the host by selectively stimulating the growth and/or activity of one or a limited number of bacteria in the colon that can improve the health of the host". Gibson, G.R. & Roberfroid, M.B., Dietary Modulation of the Human Colonic Microbiota-Introducing the Concept of Probiotics, J. Nutr. 125:1401-1412 (1995). Common prebiotics include fructo-oligosaccharide, gluco-oligosaccharide, galacto-oligosaccharide, isomalto-oligosaccharide, xylo-oligosaccharide and lactulose.

In addition, other factors present in human breast milk are believed to be beneficial to the developing body. For instance, as noted, functional proteins such as lactoferrin and transforming growth factor-beta (TGF-β) play a significant role in many processes necessary for health and development, in infants and children, as well as adults.

An infant also has nutritional requirements for other components of HM. For instance, certain nucleotides, vitamins, and the nutrients are also necessary or beneficial for the development level of an infant.

It is appreciated that HM changes during the growth and development of an infant, "automatically" adjusting to provide what are believed to be the proper nutrients, at the proper levels, at the proper times during growth. While a conventional "one size fits all" infant formula can provide adequate nutrition for a formula-fed infant, such formulas do not account for the changing requirements during development. In the case of a formula-fed infant, it would be beneficial to provide an infant feeding regimen which includes nutritional compositions tailored to provide a combination of nutrients designed to encourage healthy development and growth at each stage, at the levels believed most appropriate for the respective stages. Included in the nutritional compositions should be a prebiotic substance that simulates the functional attributes of human milk oligosaccharides in infants, such as an increase in the population and species of beneficial bacteria in the infant gut and production of a SCFA profile similar to that of a breast-fed infant. Additionally, the nutritional composition should be well tolerated in animals, especially human infants and should not produce or cause excess gas, abdominal distension, bloating or diarrhea.

### DISCLOSURE OF THE INVENTION

Briefly, the present disclosure is directed, in an embodiment, to an infant feeding regimen which includes a plurality of different nutritional compositions, each comprising a lipid or fat, a protein source, and a prebiotic composition, as well as other nutrients present at certain specific levels, especially vitamin D. In certain preferred embodiments, the compositions include a source of long chain polyunsaturated fatty acids which include docosahexanoic acid (DHA). Also, in certain embodiments, the prebiotic comprises at least 20% of an oligosaccharide which comprises galacto-oligosaccharide, such as a combination of galacto-oligosaccharide and polydextrose.

In certain embodiments, the feeding regimen of the present disclosure includes:
A. A first nutritional composition which comprises:
   i. up to about 7 grams (g)/100 kilocalories (kcal) of a fat or lipid, more preferably about 3 to about 7 g/100 kcal of a fat or lipid;
   ii. up to about 5 g/100 kcal of a protein source, more preferably about 1 to about 5 g/100 kcal of a protein source, wherein the protein source comprises from about 72% to about 90% whey and from about 10% to about 28% casein;
   iii. about 1.0 to about 10.0 g/liter (L) of a prebiotic composition; and
   iv. at least about 72 International Units (IU)/100 kcal of vitamin D, more preferably from about 74 to about 90 IU of vitamin D,
   and
B. A second nutritional composition which comprises:
   i. up to about 7 g/100 kcal of a fat or lipid, more preferably about 3 to about 7 g/100 kcal of a fat or lipid;
   ii. up to about 5 g/100 kcal of a protein source, more preferably about 1 to about 5 g/100 kcal of a protein source, wherein the protein source comprises from about 50% to about 70% whey and from about 30% to about 50% casein;
   iii. about 1.0 to about 10.0 g/L of a prebiotic composition; and
   iv. no greater than 70 IU/100 kcal of vitamin D, more preferably from about 52 to about 67 IU of vitamin D.

In certain embodiments, the prebiotic composition of the first and second nutritional composition comprises at least 20% of an oligosaccharide which comprises galacto-oligosaccharide, more preferably about 2.0 g/L to about 8.0 g/L of a prebiotic composition having at least 20% of an oligosaccharide which comprises galacto-oligosaccharide; moreover, each of the first and second nutritional compositions can, in some embodiments, also comprise about 5 to about 100 mg/100 kcal of a source of long chain polyunsaturated fatty acids which include DHA, more preferably about 10 to about 50 mg/100 kcal of a source of long chain polyunsaturated fatty acids which include DHA.

In certain embodiments of the present disclosure, the first nutritional composition also includes at least about 3.95 milligrams (mg)/100 kcal of cholesterol, more preferably from about 4.00 to about 4.90 mg/100 kcal of cholesterol, and the second nutritional composition also includes no greater than about 3.90 mg/100 kcal of cholesterol, more preferably form about 2.60 to about 3.85 mg/100 kcal of cholesterol.

In the preferred embodiments, the first nutritional composition is fed to a newborn, whereas the second nutritional composition is fed to a later stage infant.

### DISCLOSURE OF THE INVENTION

The present disclosure provides a feeding regimen which changes with the developmental stage of an infant, from newborn to later stage infant (as defined hereinabove). The nutritional products that described are easily digested, provide physiochemical benefits, and/or provide physiological benefits, and are tailored to the level of development of the infant being fed. In an embodiment of the present disclosure, a plurality of nutritional compositions is provided, including one for a newborn infant and one for a later stage infant. In certain embodiments, each nutritional composition comprises a lipid or fat, a protein source, Vitamin D, a prebiotic composition, especially one having at least 20% of an oligosaccharide which comprises a mixture of D-glucose and D-galactose (commonly referred to as galacto-oligosaccharide or trans-galacto-oligosaccharide, or GOS), and, optionally a source of long chain polyunsaturated fatty acids which include docosahexanoic acid (DHA). In some embodiments, the prebiotic comprises a combination of galacto-oligosaccharide and polydextrose.

More particularly, in an embodiment, the feeding regimen includes feeding to a newborn infant a composition which comprises:
i. up to about 7 g/100 kcal of a fat or lipid, more preferably about 3 to about 7 g/100 kcal of a fat or lipid;
ii. up to about 5 g/100 kcal of a protein source, more preferably about 1 to about 5 g/100 kcal of a protein source, wherein the protein source comprises from about 72% to about 90% whey and from about 10% to about 28% casein;
iii. about 1.0 to about 10.0 g/L of a prebiotic composition; and
iv. at least about 72 IU/100 kcal of vitamin D, more preferably from about 74 to about 90 IU of vitamin D,
and feeding to a later stage infant a composition which comprises:
i. up to about 7 g/100 kcal of a fat or lipid, more preferably about 3 to about 7 g/100 kcal of a fat or lipid;
ii. up to about 5 g/100 kcal of a protein source, more preferably about 1 to about 5 g/100 kcal of a protein source, wherein the protein source comprises from about 50% to about 70% whey and from about 30% to about 50% casein;
iii. about 1.0 to about 10.0 g/L of a prebiotic composition; and
iv. no greater than 70 IU/100 kcal of vitamin D, more preferably from about 52 to about 67 IU of vitamin D.

In other embodiments, the feeding regimen of the present disclosure includes:
A. A first nutritional composition which comprises:
   i. up to about 7 grams (g)/100 kilocalories (kcal) of a fat or lipid, more preferably about 3 to about 7 g/100 kcal of a fat or lipid;
   ii. up to about 5 g/100 kcal of a protein source, more preferably about 1 to about 5 g/100 kcal of a protein source, wherein the protein source comprises from about 72% to about 90% whey and from about 10% to about 28% casein;
   iii. about 1.0 to about 10.0 g/liter (L) of a prebiotic composition
   iv. at least about 3.95 milligrams (mg)/100 kcal of cholesterol, more preferably from about 4.00 to about 4.90 mg/100 kcal of cholesterol; and
   v. at least about 72 International Units (IU)/100 kcal of vitamin D, more preferably from about 74 to about 90 IU of vitamin D,
   and
B. A second nutritional composition which comprises:
   i. up to about 7 g/100 kcal of a fat or lipid, more preferably about 3 to about 7 g/100 kcal of a fat or lipid;
   ii. up to about 5 g/100 kcal of a protein source, more preferably about 1 to about 5 g/100 kcal of a protein source, wherein the protein source comprises from about 50% to about 70% whey and from about 30% to about 50% casein;
   iii. about 1.0 to about 10.0 g/L of a prebiotic composition;
   iv. no greater than about 3.90 mg/100 kcal of cholesterol, more preferably form about 2.60 to about 3.85 mg/100 kcal of cholesterol; and
   v. no greater than 70 IU/100 kcal of vitamin D, more preferably from about 52 to about 67 IU of vitamin D.

### DEFINITIONS

The following terms, as used herein, are defined as indicated:

"Child" and "Children" are defined as humans over the age of about 12 months to about 12 years old.

"Essential", as applied to nutrients, refers to any nutrient which cannot be synthesized by the body in amounts sufficient for normal growth and to maintain health and which therefore must be supplied by the diet, while the term "conditionally essential" as applied to nutrients means that the nutrient must be supplied by the diet under conditions when adequate amounts of the precursor compound is unavailable to the body for endogenous synthesis to occur.

"Infant" is a human from birth through not more than 12 months of age, where a "newborn infant" is an infant from birth through 4 months of age, and a "later stage infant" is an infant from 4 months of age through 1 year.

"Infant formula" applies to a composition in liquid or powdered form that satisfies the nutrient requirements of an infant by being a substitute for human milk. In the United States, the content of an infant formula is dictated by the federal regulations set forth at 21 C.F.R. §§100, 106 and 107. These regulations define macronutrient, vitamin, mineral, and other ingredient levels in an effort to simulate the nutritional and other properties of human breast milk.

"Full term infant" or "term infant" as used herein, means an infant born after at least about 37 weeks gestation, and more commonly between 37 and 42 weeks gestation.

"Nutritionally complete" means that the nutritional compositions of the present disclosure provide adequate amounts of all carbohydrates, lipids, essential fatty acids, proteins, essential amino acids, conditionally essential amino acids, vitamins, minerals, and energy required for normal growth.

"Prebiotic" means a non-digestible food ingredient that beneficially affects the host by selectively stimulating the growth and/or activity of one or a limited number of bacteria in the colon that can improve the health of the host. A "prebiotic composition" is a composition that comprises one or more prebiotics.

"Preterm infant" is an infant born after less than about 37 weeks gestation.

"Probiotic" means a microorganism with low or no pathogenicity that exerts beneficial effects on the health of the host.

"Simulating," as used herein means having or taking the form or appearance of or having or producing a symptomatic resemblance to.

### BEST MODE FOR CARRYING OUT THE INVENTION

In some embodiments, the nutritional compositions of the present disclosure may be infant formula. In a separate embodiment, the nutritional compositions may be a human milk fortifier, meaning it is a composition which is added to human milk in order to enhance the nutritional value of human milk. As a human milk fortifier, the disclosed compositions may be in powder or liquid form.

The nutritional products of the present disclosure may provide minimal, partial, or total nutritional support. The compositions may be nutritional supplements or meal replacements. In some embodiments, the compositions may be administered in conjunction with a food or nutritional composition. In this embodiment, the compositions can either be intermixed with the food or other nutritional compositions prior to ingestion by the subject or can be administered to the subject either before or after ingestion of a food or nutritional composition. The compositions may be administered to preterm infants receiving infant formula, breast milk, a human milk fortifier, or combinations thereof. In one embodiment, the compositions are administered to preterm infants as an enteral nutritional supplement.

The compositions may, but need not, be nutritionally complete. The skilled artisan will recognize "nutritionally complete" to vary depending on a number of factors including, but not limited to, age, clinical condition, and dietary intake of the subject to whom the term is being applied. The composition which is "nutritionally complete" for the preterm infant will, by definition, provide qualitatively and quantitatively adequate amounts of all carbohydrates, lipids, essential fatty acids, proteins, essential amino acids, conditionally essential amino acids, vitamins, minerals, and energy required for growth of the preterm infant. The composition which is "nutritionally complete" for the term infant will, by definition, provide qualitatively and quantitatively adequate amounts of all carbohydrates, lipids, essential fatty acids, proteins, essential amino acids, conditionally essential amino acids, vitamins, minerals, and energy required for growth of the term infant.

The nutritional compositions may be provided in any form known in the art, including a powder, a gel, a suspension, a paste, a solid, a liquid, a liquid concentrate, or a ready-to-use product. In one preferred embodiment, the nutritional compositions are infant formulae, especially infant formulae adapted for use as sole source nutrition for a newborn infant and a later stage infant, respectively.

In the preferred embodiments, the nutritional products disclosed herein may be administered enterally. As used herein, "enteral" means through or within the gastrointestinal, or digestive, tract, and "enteral administration" includes oral feeding, intragastric feeding, transpyloric administration, or any other introduction into the digestive tract.

Suitable fat or lipid sources for practicing the present disclosure may be any known or used in the art, including but not limited to, animal sources, e.g., milk fat, butter, butter fat, egg yolk lipid; marine sources, such as fish oils, marine oils, single cell oils; vegetable and plant oils, such as corn oil, canola oil, sunflower oil, soybean oil, palmolein, coconut oil, high oleic sunflower oil, evening primrose oil, rapeseed oil, olive oil, flaxseed (linseed) oil, cottonseed oil, high oleic safflower oil, palm stearin, palm kernel oil, wheat germ oil; medium chain triglyceride oils and emulsions and esters of fatty acids; and any combinations thereof.

Useful bovine milk protein sources include, but are not limited to, milk protein powders, milk protein concentrates, milk protein isolates, nonfat milk solids, nonfat milk, nonfat dry milk, whey protein, whey protein isolates, whey protein concentrates, sweet whey, acid whey, casein, acid casein, caseinate (e.g. sodium caseinate, sodium calcium caseinate, calcium caseinate) and any combinations thereof, and will include whey and casein. As noted above, the protein source of the first nutritional composition should comprise from about 72% to about 90% whey and from about 10% to about 28% casein; while the protein source in the second nutritional composition should comprise from about 50% to about 70% whey and from about 30% to about 50% casein. Adjusting the whey:casein ratio as described is also an effective way of providing for the relative levels of other nutrients described herein.

In one embodiment, the proteins are provided as intact proteins. In other embodiments, the proteins are provided as a combination of both intact proteins and partially hydrolyzed proteins, with a degree of hydrolysis of between about 4% and 10%. In still further embodiments, the proteins comprise extensively hydrolyzed proteins. In yet another embodiment, the protein source may be supplemented with glutamine-containing peptides.

The nutritional compositions each contain one or more prebiotics. Such prebiotics may be naturally-occurring, synthetic, or developed through the genetic manipulation of organisms and/or plants, whether such new source is now known or developed later. Prebiotics useful in the present invention may include oligosaccharides, polysaccharides, and other prebiotics that contain fructose, xylose, soya, galactose, glucose and mannose. More specifically, prebiotics useful in the present invention may include lactulose, lactosucrose, raffinose, gluco-oligosaccharide, inulin, polydextrose, polydextrose powder, fructo-oligosaccharide, isomalto-oligosaccharide, soybean oligosaccharides, lactosucrose, xylo-oligosacchairde, chito-oligosaccharide, manno-oligosaccharide, aribino-oligosaccharide, siallyl-oligosaccharide, fuco-oligosaccharide, galacto-oligosaccharide, and gentio-oligosaccharides. In an embodiment, the prebiotics useful in the present disclosure are those disclosed in U.S. patent No. 7,572,474, the disclosure of which is incorporated by reference herein.

In an embodiment, the total amount of prebiotics present in the nutritional compositions may be from about 1.0 g/L to about 10.0 g/L of the composition. As noted, the total amount of prebiotics present in the nutritional compositions may be from about 2.0 g/L and about 8.0 g/L of the composition. In some preferred embodiments, at least 20% of the prebiotics comprise galacto-oligosaccharide.

In addition to galacto-oligosaccharide, the prebiotic composition can also comprise polydextrode (PDX). If polydextrose is used as a prebiotic, the amount of polydextrose in the nutritional composition may, in an embodiment, be within the range of from about 1.0 g/L to about 4.0 g/L.

The amount of galacto-oligosaccharide in the nutritional compositions may, in an embodiment, be from about 0.2 mg/100 Kcal to about 1.0 mg/100 Kcal. In another embodiment, the amount of galacto-oligosaccharide in the nutritional composition may be from about 0.1 mg/100 Kcal to about 0.5 mg/100 Kcal. If polydextrose is used as a prebiotic, the amount of polydextrose in the nutritional composition may, in an embodiment, be within the range of from about 0.1 mg/100 Kcal to about 0.5 mg/100 Kcal.

In an embodiment of the disclosure, the nutritional compositions may each contain one or more probiotics. The term "probiotic" means a microorganism that exerts beneficial effects on the health of the host. Any probiotic known in the art may be acceptable in this embodiment provided it achieves the intended result. In a particular embodiment, the probiotic may be selected from *Lactobacillus* species, *Lactobacillus rhamnosus* GG, *Bifidobacterium* species, *Bifidobacterium longum*, and *Bifidobacterium animalis subsp*. *lactis* BB-12.

If included in the compositions, the amount of the probiotic may vary from about 10⁴ to about 10¹⁰ colony forming units (cfu) per kg body weight per day. In another embodiment, the amount of the probiotic may vary from about 10⁶ to about 10⁹ cfu per kg body weight per day. In yet another embodiment, the amount of the probiotic may be at least about 10⁶ cfu per kg body weight per day.

In an embodiment, the probiotic(s) may be viable or non-viable. As used herein, the term "viable", refers to live microorganisms. The term "non-viable" or "non-viable probiotic" means non-living probiotic microorganisms, their cellular components and/or metabolites thereof. Such non-viable probiotics may have been heat-killed or otherwise inactivated but retain the ability to favorably influence the health of the host. The probiotics useful herein may be naturally-occurring, synthetic or developed through the genetic manipulation of organisms, whether such new source is now known or later developed.

The nutritional formulations also preferably contain a source of long chain polyunsaturated fatty acids (LCPUFAs) which comprise docosahexanoic acid (DHA). Other suitable LCPUFAs include, but are not limited to, α-linoleic acid, Y-linoleic acid, linoleic acid, linolenic acid, eicosapentanoic acid (EPA) and arachidonic acid (ARA).

In one embodiment, the nutritional compositions are supplemented with both DHA and ARA. In this embodiment, the weight ratio of ARA:DHA may be from about 1:3 to about 9:1. In one embodiment, this ratio is from about 1:2 to about 4:1.

The amount of long chain polyunsaturated fatty acids in the nutritional compositions may vary from about 5 mg/100 kcal to about 100 mg/100 kcal, more preferably from about 10 mg/100 kcal to about 50 mg/100 kcal.

DHA and ARA supplementation may be effected using standard techniques known in the art. For example, DHA and ARA may be added to the formulae by replacing an equivalent amount of an oil, such as high oleic sunflower oil, normally present in the formulae. As another example, the oils containing DHA and ARA may be added to the formulae by replacing an equivalent amount of the rest of the overall fat blend normally present in the formulae without DHA and ARA.

If utilized, the source of DHA and ARA may be any source known in the art such as marine oil, fish oil, single cell oil, egg yolk lipid, and brain lipid. In some embodiments, the DHA and ARA are sourced from the single cell Martek oil, DHASCO® and ARASCO®, respectively, or variations thereof. The DHA and ARA can be in natural form, provided that the remainder of the LCPUFA source does not result in any substantial deleterious effect on the infant. Alternatively, the DHA and ARA can be used in refined form.

In an embodiment of the present disclosure, sources of DHA and ARA are single cell oils as taught in U.S. Patent Nos. 5,374,567; 5,550,156; and 5,397,591.

The nutritional compositions described herein can, in some embodiments, also comprise non-human lactoferrin, non-human lactoferrin produced by a genetically modified organism and/or human lactoferrin produced by a genetically modified organism. Lactoferrin is generally described as a 80 kilodalton glycoprotein having a structure of two nearly identical lobes, both of which include iron binding sites. As described in *"*Perspectives on Interactions Between Lactoferrin and Bacteria" which appeared in the publication BIOCHEMISTRY AND CELL BIOLOGY, pp 275-281 (2006), lactoferrin from different host species may vary in an amino acid sequence though commonly possesses a relatively high isoelectric point with positively charged amino acids at the end terminal region of the internal lobe. Lactoferrin has been recognized as having bactericidal and antimicrobial activities. Suitable lactoferrins for use in the present disclosure include those having at least 48% homology with the amino acid sequence AVGEQELRKCNQWSGL at the HLf (349-364) fragment. In at least one embodiment, the lactoferrin is bovine lactoferrin.

Surprisingly, the forms of lactoferrin included herein maintain relevant activity even if exposed to a low pH (i.e., below about 7, and even as low as about 4.6 or lower) and/or high temperatures (i.e., above about 65°C, and as high as about 120°C, conditions which would be expected to destroy or severely limit the stability or activity of human lactoferrin or recombinant human lactoferrin. These low pH and/or high temperature conditions can be expected during certain processing regimen for nutritional compositions of the types described herein, such as pasteurization. For instance, while bovine lactoferrin has an the amino acid composition which has only about a 70% sequence homology to that of human lactoferrin, and is stable and remains active under conditions under which human or recombinant human lactoferrin become unstable or inactive, bovine lactoferrin has bactericidal activity against undesirable bacterial pathogens found in the human gut.

In yet another embodiment, the compositions may contain TGF-β. Transforming growth factor-beta (TGF-β) is the general name for a family of polypeptides, the members of which have multifunctional regulatory activities. Three differentially regulated mammalian isoforms (termed TGF-β1, TGF-β2, and TGF-β3) play important roles in a multitude of processes in the developing embryo, infant, child and adult. TGF-β is a 25-kDa homodimeric cytokine known to mediate pleitropic functions both within the immune system and systemically. TGF-β is expressed in several cell types in the intestinal mucosal including lymphocytes, epithelial cells, macrophages, and stromal cells as well as by T-cells, neutrophils, macrophages, epithelial cells, fibroblasts, platelets, osteoblasts, osteoclasts and others. In addition, TGF-β is present in human breast milk and may influence multiple aspects of infant health and development. TGF-βs are synthesized as large precursor proteins which consist of an amino-terminal pro-domain, comprising a signal sequence and latency-associated complex, and a mature carboxy-terminal subunit. Biologically active TGF-βs are homodimers which consist of two identical, disulfide-linked mature subunits. Release of the TGF-β homodimer from the latency-associated complex is necessary for TGF-β to exert biological activity on target cells. The nature of the latency-associated complex and the mechanisms responsible for TGF-β release are key to understanding TGF-β biological activity in vivo. In the human gut, this may be accomplished by the action of proteolytic enzymes, pH extremes, heat, calcium, and/or mechanical tearing.

Based on the numerous benefits provided by TGF-β, it is often important that the growth factor is present in, or supplemented into, various nutritional products. For example, certain protein sources in nutritional products may provide a source of TGF-β. Alternatively, if the nutritional product itself does not contain TGF-β, the growth factor may be supplemented into the product. As noted above, however, the release of TGF-β is in its inactive form. The TGF-β present in the protein sources of nutritional products, or added to those nutritional products, is also in its inactive form. It is then activated in the human gut by enzymes, extremes of pH, and/or tearing.

In a further embodiment, the disclosed compositions may enhance the bioactivity of TGF-β in the human gut from about 25% to about 75%. In a particular embodiment, the compositions may enhance the bioactivity of TGF-β in the human gut from about 15% to about 65%.

In certain embodiments, the level of TGF-β in the nutritional compositions is from about 0.0150 (pg/µg) ppm to about 0.1000 (pg/µg) ppm. In another embodiment, the level of TGF-β in the nutritional compositions is from about 0.0225 (pg/µg) ppm to about 0.0750 (pg/µg) ppm.

In a particular embodiment, the level of TGF-β in the nutritional compositions is from about 2500 pg/mL to about 10,000 pg/mL composition. In yet another embodiment, the level of TGF-β in the nutritional compositions is from about 4000 pg/mL to about 6000 pg/mL.

In an embodiment, the level of TGF-β1 in the nutritional compositions is from about 0.0001 (pg/µg) ppm to about 0.0075 (pg/µg) ppm. In another embodiment, the level of TGF-β1 in the nutritional compositions is from about 0.0010 (pg/µg) ppm to about 0.0050 (pg/µg) ppm. In another embodiment, the level of TGF-β2 in the nutritional compositions is from about 0.0150 (pg/µg) ppm to about 0.0750 (pg/µg) ppm. In another embodiment, the level of TGF- β2 in the nutritional compositions is from about 0.0250 (pg/µg) ppm to about 0.0500 (pg/µg) ppm.

In certain embodiments, the ratio of TGF-β1:TGF-β2 in the nutritional compositions is in the range of about 1:1 to about 1:20. In certain other embodiments, the ratio of TGF-β1:TGF-β2 in the nutritional compositions is in the range of about 1:8 to about 1:13.

In still further embodiments, the bioactivity of TGF-β within the nutritional compositions is from about 500 nanogram equivalents (ng Eq)/100 kcal to about 5000 ng Eq/100 kcal. In another embodiment, the bioactivity of TGF-β within the nutritional compositions is from about 800 ng Eq/100 kcal to about 2500 ng Eq/100 kcal.

While not wishing to be bound by this or any theory, the enhanced TGF-β bioactivity in the human gut may be due to the composition of the invention lowering the pH of the infant gut and allowing a greater or faster activation of TGF-β. In addition to enhancing the activation of TGF-β bioactivity in the human gut, it is believed that the nutritional compositions may additionally enhance other bioactive components in the human gut. Thus, in an embodiment, the invention is directed to a method for enhancing the bioactivity of one or more bioactive factors in the human gut.

In some embodiments, the bioactivity of TGF-β in a nutritional composition is enhanced by the addition of a bioactive whey fraction. Any bioactive whey fraction known in the art may be used in this embodiment provided it achieves the intended result. In an embodiment, this bioactive whey fraction may be a whey protein concentrate. In a particular embodiment, the whey protein concentrate may be Salibra^{®} 800, available from Glanbia Nutritionals. In a particular embodiment, the Salibra^{®} 800 whey protein concentrate is at least 2.5% acidified. In another embodiment, the whey protein concentrate may be Nutri Whey 800, available from DMV International. In yet another embodiment, the whey protein concentrate may be Salibra-850, available from Glanbia Nutritionals. In still another embodiment, the whey protein concentrate may be Prolacta Lacatalis WPI90, available from Lactilus Industrie U.S.A., Inc. In a further embodiment, the whey protein concentrate may be supplied by MG Nutritionals.

As would be recognized by the skilled artisan, vitamins are also considered necessary for development of an infant. Again, however, the level of certain vitamins needed at different stages of development can differ. For instance, with respect to vitamin D, in some embodiments the first nutritional composition of the present disclosure should include at least about 72 IU/100 kcal of vitamin D, more preferably from about 74 to about 90 IU of vitamin D. The second nutritional composition should include no greater than 70 IU/100 kcal of vitamin D, more preferably from about 52 to about 67 IU of vitamin D.

As noted, in some embodiments, the nutritional compositions of the present disclosure include cholesterol. Cholesterol is a steroid metabolite found in the cell membranes and transported in the blood plasma of animals, and is an essential structural component of mammalian cell membranes, where it is required to establish proper membrane permeability and fluidity. As such, cholesterol is required during development, at levels which can vary based on the stage of development. In certain embodiments, cholesterol is present in the first nutritional composition at a level of at least about 3.95 mg/100 kcal and in the second nutritional composition at a level of no greater than about 3.90 mg/100 kcal of cholesterol, more preferably from about 2.60 to about 3.85 mg/100 kcal of cholesterol. In other embodiments, cholesterol is present in the first composition at a level of about 4.00 to about 4.90 mg/100 kcal of cholesterol, more preferably at a level of about 4.2 to about 4.7 mg/100 kcal and in the second nutritional composition at a level of from about 2.8 to about 3.3 mg cholesterol/100 kcal.

The following examples describe various embodiments of the present disclosure. Other embodiments within the scope of the claims herein will be apparent to one skilled in the art from consideration of the specification or practice of the invention as disclosed herein. It is intended that the specification, together with the examples, be considered to be exemplary only, with the scope of the invention being indicated by the claims which follow the examples. In the examples, all percentages are given on a weight basis unless otherwise indicated.

### Example 1

This example illustrates an embodiment of the feeding regimen of the present disclosure, including a first nutritional composition as follows:

| **Description** | **UOM** | **per 100 kcal** |
|---|---|---|
| Protein | g | 2.1 |
| Whey : Casein Ratio | | 80:20 |
| Fat | g | 5.3 |
| Linoleic acid | mg | 860 |
| a-Linolenic | mg | 80 |
| ARA | mg | 34 |
| DHA | mg | 17 |
| Carbohydrate | g | 10.6 |
| Galacto-oligosaccharide (GOS) | g | 0.3 |
| Polydextrose (PDX) | g | 0.3 |
| Vitamin A | IU | 300 |
| Vitamin D | IU | 75 |
| Vitamin E | IU | 2 |
| Vitamin K | mcg | 9 |
| Thiamin | mcg | 80 |
| Riboflavin | mcg | 140 |
| Vitamin B6 | mcg | 60 |
| Vitamin B12 | mcg | 0.3 |
| Niacin | mcg | 1000 |
| Folic Acid | mcg | 16 |
| Pantothenic acid | mcg | 500 |
| Biotin | mcg | 3 |
| Vitamin C | mg | 12 |
| Choline | mg | 24 |
| Inositol | mg | 6 |
| Carnitine | mg | 2 |
| Taurine | mg | 6 |
| Calcium | mg | 78 |
| Phosphorus | mg | 43 |
| Magnesium | mg | 8 |
| Iron | mg | 1.8 |
| Zinc | mg | 1 |
| Manganese | mcg | 15 |
| Copper | mcg | 75 |
| Iodine | mcg | 15 |
| Selenium | mcg | 2.8 |
| Sodium | mg | 27 |
| Potassium | mg | 108 |
| Chloride | mg | 63 |
| Total nucleotides | mg | 4.2 |

And a second nutritional composition as follows:

| **Description** | **UOM** | **per 100 kcal** |
|---|---|---|
| Protein | g | 2.1 |
| Protein factor | | 6.25 |
| Whey : Casein Ratio | | 60:40 |
| Fat | g | 5.3 |
| Linoleic acid | mg | 860 |
| a-Linolenic | mg | 80 |
| ARA | mg | 34 |
| DHA | mg | 17 |
| Carbohydrate | g | 10.6 |
| Galacto-oligosaccharide (GOS) | g | 0.3 |
| Polydextrose (PDX) | g | 0.3 |
| Vitamin A | IU | 300 |
| Vitamin D | IU | 60 |
| Vitamin E | IU | 2 |
| Vitamin K | mcg | 9 |
| Thiamin | mcg | 80 |
| Riboflavin | mcg | 140 |
| Vitamin B6 | mcg | 60 |
| Vitamin B12 | mcg | 0.3 |
| Niacin | mcg | 1000 |
| Folic Acid | mcg | 16 |
| Pantothenic acid | mcg | 500 |
| Biotin | mcg | 3 |
| Vitamin C | mg | 12 |
| Choline | mg | 24 |
| Inositol | mg | 6 |
| Carnitine | mg | 2 |
| Taurine | mg | 6 |
| Calcium | mg | 78 |
| Phosphorus | mg | 43 |
| Ca:P | | 1.81 |
| Magnesium | mg | 8 |
| Iron | mg | 1.8 |
| Zinc | mg | 1 |
| Manganese | mcg | 15 |
| Copper | mcg | 75 |
| Iodine | mcg | 15 |
| Selenium | mcg | 2.8 |
| Sodium | mg | 27 |
| Potassium | mg | 108 |
| Chloride | mg | 63 |
| Total nucleotides | mg | 4.2 |

## Claims

1. A feeding regimen for an infant, comprising
(a) feeding to a newborn infant, being an infant from birth through 4 months of age, a first composition which comprises:
i. a fat or lipid;
ii. a protein source, wherein the protein source comprises from 72% to 90% whey and from 10% to 28% casein;
iii. a prebiotic composition;
iv. at least 72 IU/100 kcal of vitamin D, and
(b) feeding to a later stage infant, being an infant from 4 months of age through 1 year, a second composition which comprises:
i. a fat or lipid;
ii. a protein source, wherein the protein source comprises from 50% to 70% whey and from 30% to 50% casein;
iii. a prebiotic composition;
iv. no greater than 70 IU/100 kcal of vitamin D.

2. The feeding regimen of claim 1, wherein the first composition comprises from 74 to 90 IU of vitamin D.

3. The feeding regimen of claim 1, wherein the second composition comprises from 52 to 67 IU of vitamin D.

4. The feeding regimen of claim 1, wherein each of the first and second compositions comprises 3 to 7 g/100 kcal of a fat or lipid.

5. The feeding regimen of claim 1, wherein each of the first and second compositions comprises 1 to 5 g/100 kcal of a protein source.

6. The feeding regimen of claim 1, wherein each of the first and second compositions comprises 5 to 100 mg/100 kcal of a source of long chain polyunsaturated fatty acids which include DHA.

7. The feeding regimen of claim 1, wherein the prebiotic composition of each of the first and second compositions comprises at least 20% of an oligosaccharide which comprises galacto-oligosaccharide.

8. The feeding regimen of claim 7, wherein the prebiotic composition of each of the first and second compositions comprises 2.0 g/L to 8.0 g/L of a prebiotic composition having at least 20% of an oligosaccharide which comprises galacto-oligosaccharide.

9. The feeding regimen of claim 1, wherein the prebiotic composition of each of the first and second compositions further comprises polydextrose.

10. The feeding regimen of claim 1, wherein each of the first and second compositions further comprises at least one probiotic.

11. The feeding regimen of claim 10, wherein the probiotic is selected from the group consisting of *Bifidobacteria* spp., *Lactobacillus* spp and combinations thereof.

12. The feeding regimen of claim 1, wherein the first nutritional composition comprises at least 3.95 milligrams (mg)/100 kcal of cholesterol and the second nutritional composition comprises no greater than 3.90 mg/100 kcal of cholesterol.

13. A method for providing nutrition to an infant, comprising
(a) feeding to a newborn infant, being an infant from birth through 4 months of age, a first composition which comprises:
i. a fat or lipid;
ii. a protein source, wherein the protein source comprises from 72% to 90% whey and from 10% to 28% casein;
iii. a prebiotic composition;
iv. at least 72 IU/100 kcal of vitamin D, and
(b) feeding to a later stage infant, being an infant from 4 months of age through 1 year, a second composition which comprises:
i. a fat or lipid;
ii. a protein source, wherein the protein source comprises from 50% to 70% whey and from 30% to 50% casein;
iii. a prebiotic composition;
iv. no greater than 70 IU/100 kcal of vitamin D.

14. The method of claim 13, wherein the compositions are as defined in any one of the claims 2 to 11.

## Patentansprüche

1. Ernährungsplan für einen Säugling, umfassend
(a) Ernähren eines neugeborenen Säuglings, der ein Säugling ab der Geburt bis zum Alter von 4 Monaten ist, mit einer ersten Zusammensetzung, welche umfasst:
i. ein Fett oder ein Lipid;
ii. eine Proteinquelle, wobei die Proteinquelle von 72 % bis 90 % Molke und von 10 % bis 28 % Kasein umfasst;
iii. eine präbiotische Zusammensetzung;
iv. mindestens 72 IE/100 kcal Vitamin D, und
(b) Ernähren eines älteren Säuglings, der ein Säugling ab dem Alter von 4 Monaten bis zu 1 Jahr ist, mit einer zweiten Zusammensetzung, welche umfasst:
i. ein Fett oder ein Lipid;
ii. eine Proteinquelle, wobei die Proteinquelle von 50 % bis 70 % Molke und von 30 % bis 50 % Kasein umfasst;
iii. eine präbiotische Zusammensetzung;
iv. nicht mehr als 70 IE/100 kcal Vitamin D.

2. Ernährungsplan nach Anspruch 1, wobei die erste Zusammensetzung von 74 bis 90 IE Vitamin D umfasst.

3. Ernährungsplan nach Anspruch 1, wobei die zweite Zusammensetzung von 52 bis 67 IE Vitamin D umfasst.

4. Ernährungsplan nach Anspruch 1, wobei jede der ersten und zweiten Zusammensetzungen 3 bis 7 g/100 kcal eines Fetts oder Lipids umfasst.

5. Ernährungsplan nach Anspruch 1, wobei jede der ersten und zweiten Zusammensetzungen 1 bis 5 g/100 kcal einer Proteinquelle umfasst.

6. Ernährungsplan nach Anspruch 1, wobei jede der ersten und zweiten Zusammensetzungen 5 bis 100 mg/100 kcal einer Quelle von langkettigen, mehrfach ungesättigten Fettsäuren, darunter DHA, umfasst.

7. Ernährungsplan nach Anspruch 1, wobei die präbiotische Zusammensetzung von jeder der ersten und zweiten Zusammensetzungen mindestens 20 % eines Oligosaccharids, umfassend Galacto-Oligosaccharid, umfasst.

8. Ernährungsplan nach Anspruch 7, wobei die präbiotische Zusammensetzung von jeder der ersten und zweiten Zusammensetzungen 2,0 g/L bis 8,0 g/L einer präbiotischen Zusammensetzung mit mindestens 20 % eines Oligosaccharids, umfassend Galacto-Oligosaccharid, umfasst.

9. Ernährungsplan nach Anspruch 1, wobei die präbiotische Zusammensetzung von jeder der ersten und zweiten Zusammensetzungen ferner Polydextrose umfasst.

10. Ernährungsplan nach Anspruch 1, wobei jede der ersten und zweiten Zusammensetzungen ferner mindestens ein Probiotikum umfasst.

11. Ernährungsplan nach Anspruch 10, wobei das Probiotikum ausgewählt ist aus der Gruppe, bestehend aus *Bifidobacteria* spp., *Lactobacillus* spp. und Kombinationen davon.

12. Ernährungsplan nach Anspruch 1, wobei die erste Nährstoffzusammensetzung mindestens 3,95 Milligramm (mg)/100 kcal Cholesterin und die zweite Nährstoffzusammensetzung nicht mehr als 3,90 mg/100 kcal Cholesterin umfasst.

13. Verfahren zur Bereitstellung von Nahrung an einen Säugling, umfassend
(a) Ernähren eines neugeborenen Säuglings, der ein Säugling ab der Geburt bis zum Alter von 4 Monaten ist, mit einer ersten Zusammensetzung, welche umfasst:
i. ein Fett oder ein Lipid;
ii. eine Proteinquelle, wobei die Proteinquelle von 72 % bis 90 % Molke und von 10 % bis 28 % Kasein umfasst;
iii. eine präbiotische Zusammensetzung;
iv. mindestens 72 IE/100 kcal Vitamin D, und
(b) Ernähren eines älteren Säuglings, der ein Säugling ab dem Alter von 4 Monaten bis zu 1 Jahr ist, mit einer zweiten Zusammensetzung, welche umfasst:
i. ein Fett oder ein Lipid;
ii. eine Proteinquelle, wobei die Proteinquelle von 50 % bis 70 % Molke und von 30 % bis 50 % Kasein umfasst;
iii. eine präbiotische Zusammensetzung;
iv. nicht mehr als 70 IE/100 kcal Vitamin D.

14. Verfahren nach Anspruch 13, wobei die Zusammensetzungen in einem der Ansprüche 2 bis 11 definiert sind.

## Revendications

1. Un régime alimentaire pour un nourrisson, comprenant :
(a) l'alimentation d'un nouveau-né, étant un enfant de la naissance jusqu'à l'âge de 4 mois, par une première composition qui comprend:
i. une matière grasse ou un lipide;
ii. une source de protéines, laquelle source de protéines comprend de 72% à 90% de lactosérum et de 10% à 28% de caséine;
iii. une composition prébiotique;
iv. au moins 72 UI/100 kcal de vitamine D, et
(b) l'alimentation d'un nourrisson à un âge ultérieur, étant un enfant de l'âge de 4 mois jusqu'à l'âge d'une année, par une seconde composition qui comprend:
i. une matière grasse ou un lipide;
ii. une source de protéines, laquelle source de protéines comprend de 50% à 70% de lactosérum et de 30% à 50% de caséine;
iii. une composition prébiotique;
iv. pas plus de 70 UI/100 kcal de vitamine D.

2. Le régime alimentaire selon la revendication 1, dans lequel la première composition comprend de 74 à 90 UI de vitamine D.

3. Le régime alimentaire selon la revendication 1, dans lequel la deuxième composition comprend de 52 à 67 UI de vitamine D.

4. Le régime alimentaire selon la revendication 1, dans lequel chacune des première et seconde compositions comprend de 3 à 7 g/100 kcal d'une matière grasse ou d'un lipide.

5. Le régime alimentaire selon la revendication 1, dans lequel chacune des première et seconde compositions comprend de 1 à 5 g/100 kcal d'une source de protéines.

6. Le régime alimentaire selon la revendication 1, dans lequel chacune des première et seconde compositions comprend de 5 à 100 mg/100 kcal d'une source d'acides gras polyinsaturés à chaîne longue qui incluent le DHA.

7. Le régime alimentaire selon la revendication 1, dans laquelle la composition prébiotique de chacune des première et seconde compositions comprend au moins 20% d'un oligosaccharide qui comprend une galacto-oligosaccharide.

8. Le régime alimentaire selon la revendication 7, dans lequel la composition prébiotique de chacune des première et seconde compositions comprend de 2,0 g/l à 8,0 g/l d'une composition prébiotique ayant au moins 20% d'un oligosaccharide qui comprend une galacto-oligosaccharide.

9. Le régime alimentaire selon la revendication 1, dans laquelle la composition prébiotique de chacune des première et seconde compositions comprend en outre du polydextrose.

10. Le régime alimentaire selon la revendication 1, dans lequel chacune des première et seconde compositions comprend en outre au moins un probiotique.

11. Le régime alimentaire selon la revendication 10, dans laquelle le probiotique est choisi parmi le groupe constitué par *Bifidobacterium* spp., *Lactobacillus* spp et des combinaisons de ceux-ci.

12. Le régime alimentaire selon la revendication 1, dans lequel la première composition nutritionnelle comprend au moins 3,95 milligramme (mg)/100 kcal de cholestérol et la seconde composition nutritionnelle comprend pas plus de 3,90 mg/100 kcal de cholestérol.

13. Procédé pour assurer la nutrition d'un nourrisson, comprenant :
(a) l'alimentation d'un nouveau-né, étant un enfant de la naissance jusqu'à l'âge de 4 mois, par une première composition qui comprend:
i. une matière grasse ou un lipide;
ii. une source de protéines, dans laquelle la source de protéines comprend de 72% à 90% de lactosérum et de 10% à 28% de caséine;
iii. une composition prébiotique;
iv. au moins 72 UI/100 kcal de vitamine D, et
(b) l'alimentation d'un nourrisson à un âge ultérieur, étant un enfant de l'âge de 4 mois à l'âge d'une année, par une seconde composition qui comprend:
i. une matière grasse ou un lipide;
ii. une source de protéines, dans laquelle la source de protéines comprend de 50% à 70% de lactosérum et de 30% à 50% de caséine;
iii. une composition prébiotique;
iv. pas plus de 70 UI/100 kcal de vitamine D.

14. Le procédé selon la revendication 13, dans lequel les compositions sont telles que définies dans une quelconque des revendications 2 à 11.
